# EUROPÄISCHE PATENTSCHRIFT

(11) **EP 2 955 087 B1**
(45) Veröffentlichungstag und Bekanntmachung des Hinweises auf die Patenterteilung: **14.12.2022**
(21) Anmeldenummer: 15162065.5
(22) Anmeldetag: 31.03.2015
(51) Int. Cl.: B62D 63/06

(54) **ABSENKBARER FAHRZEUGANHÄNGER**
LOWERABLE VEHICLE TRAILER
REMORQUE DE VEHICULE ABAISSABLE

(30) Priorität: 07.04.2014 DE 202014101630 U
(43) Veröffentlichungstag der Anmeldung: 16.12.2015
(73) Patentinhaber: Humbaur GmbH, 86368 Gersthofen (DE)
(72) Erfinder: Humbaur, Ulrich, 86368 Gersthofen (DE)
(74) Vertreter: Meissner Bolte Partnerschaft mbB

(56) Entgegenhaltungen:
- WO-A1-2007/145537
- FR-A5- 2 130 911
- US-A1- 2005 236 796
- US-B1- 6 592 139

## Beschreibung

Die Erfindung betrifft einen absenkbaren Fahrzeuganhänger mit den Merkmalen des Hauptanspruchs.

Ein absenkbarer Fahrzeuganhänger ist aus der Praxis bekannt. Er weist eine Schwenkachse mit einem an Achsböcken schwenkbar gelagerten Achskörper auf. Die Kotflügel sind am Achskörper starr befestigt und drehen mit diesem synchron bei der Absenk- und Hebebewegung mit. Dies beeinträchtigt die Gestaltung und die Schutzfunktion der Kotflügel.

Die WO 2007/1455387 A1 zeigt einen absenkbaren mehrachsigen Fahrzeuganhänger, bei dem jeweils der Kotflügel und ein Achszapfen gemeinsam an einem das Absenken bewirkenden Gestänge starr angeordnet sind. Die Kotflügel sind starr mit der Schwenkachse verbunden und bewegen sich beim Schwenken der Fahrzeugräder in einer Schwenkbewegung um den jeweiligen Lagerbolzen synchron mit.

Die FR 2 130 911 A5 lehrt einen absenkbaren Fahrzeuganhänger, bei dem jeweils an einem Achszapfen eines Querträgers des Chassis ein Radschwinghebel mit einem Fahrzeugrad und daneben ein Kotflügel schwenkbar gelagert sind. Der Kotflügel ist eigenständig und unabhängig vom Radschwinghebel frei schwenkbar am Achszapfen gelagert. Der Kotflügel wird beim Absenken vom Fahrzeugrad bis über einen Totpunkt mitgenommen und schwenkt dann durch Eigengewicht in eine abgeklappte Endlage. Beim Anheben des Fahrzeuganhänger muss der abgeklappte Kotflügel von Hand angehoben und in die Betriebsstellung zurückgeschwenkt werden.

Es ist Aufgabe der vorliegenden Erfindung, die Bewegungstechnik für den Kotflügel an einem absenkbaren Fahrzeuganhänger zu verbessern.

Die Erfindung löst diese Aufgabe mit den Merkmalen im Hauptanspruch.

Der beanspruchte absenkbare Fahrzeuganhänger mit der eigenständigen Bewegungseinrichtung, vorzugsweise Schwenkeinrichtung, für den Kotflügel bietet verschiedene Vorteile.

Einerseits kann die Kinematik des Kotflügels und der Kotflügelbewegung beim Absenken und Heben des Chassis bzw. des Fahrzeuganhängers verbessert werden. Kollisionen des Kotflügels mit dem Untergrund oder anderen Anhängerteilen können sicher vermieden werden.

Ferner kann die Form und Anordnung des Kotflügels nach den im Fahrbetrieb bestehenden Anforderungen ausgelegt und insbesondere optimiert werden. Der Kotflügel kann den optimalen Abstand und Bogenumfang zur Abdeckung des Fahrzeugrads im Fahrbetrieb haben. Kotflügelverkürzungen wie beim Stand der Technik zur Vermeidung von Kollisionen beim Absenken mit dem Untergrund oder einem benachbarten Kotflügel können vermieden werden.

Mit der Bewegungseinrichtung führt der Kotflügel eine Relativbewegung zum Fahrzeugrad aus. Beim Absenken kann der Kotflügel vom Fahrzeugrad wegbewegt werden und beim Anheben wieder in die fahrbetriebsgerechte Position am Fahrzeugrad zurück bewegt werden. Ein Kontakt von Kotflügel und Fahrzeugrad kann vermieden werden.

Die Bewegungseinrichtung und die Kotflügelkinematik können in unterschiedlicher Weise ausgebildet sein. Hierbei ist ein Koppelelement zwischen der Schwenkachse, insbesondere ihrem schwenkbaren Achskörper, und dem Kotflügel angeordnet und vorzugsweise mit beiden schwenkbar verbunden, welches die Bewegung der Schwenkachse, insbesondere des schwenkbaren Achskörpers, auf den Kotflügel überträgt und als Antriebsbewegung nutzt. Der Kotflügel ist eigenständig am Chassis drehbar gelagert oder verschieblich geführt. Die Bewegungseinrichtung weist ein Schwenklager oder eine Hubeinrichtung zwischen dem Kotflügel und dem Chassis auf. Das Koppelelement ist bevorzugt stangenförmig ausgebildet. Das Koppelelement ist ferner in Fahrtrichtung gesehen mit Abstand vom Schwenklager oder der Hubeinrichtung bzw. deren Hubführung angeordnet.

Vorzugsweise kommt eine Schwenkeinrichtung zum Einsatz, die eine besonders einfache, definierte und sichere Kotflügelbewegung ermöglicht. Sie bringt außerdem nur einen geringen Bauaufwand mit sich und lässt sich leicht montieren. In der Ruhe- oder Fahrbetriebsstellung kann der Kotflügel am Chassis mit einem Haltemittel geführt und zentriert werden. Die Bewegungseinrichtung sorgt auch für eine sichere Fixierung des Kotflügels in der Ruhe- oder Fahrbetriebsstellung.

Die Bewegungseinrichtung kann bei der Erstausrüstung eines Fahrzeuganhängers vorgesehen sein und lässt sich alternativ bei Bedarf auch nachrüsten. Die beanspruchte Bewegungseinrichtung lässt sich mit unterschiedlichen Arten von Schwenkachsen und deren Komponenten kombinieren. Sie ist außerdem für unterschiedlichste Arten und Ausbildungen von Chassis und Aufbau geeignet. Ferner ist ein Einsatz bei Einachs- und Mehrachsanhängern möglich.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: einen absenkbaren Fahrzeuganhänger mit schwenkbaren Kotflügeln und einer Schwenkeinrichtung in einer perspektivischen Ansicht,
- Figur 2:: eine perspektivische Ansicht des Chassis und der Schwenkachse des absenkbaren Fahrzeuganhängers von Figur 1 ohne Aufbau,
- Figur 3 und 4:: abgebrochene und vergrößerte perspektivische innere Detailansichten von Chassis, Schwenkachse und Schwenkeinrichtung des Kotflügels
- Figur 5:: eine perspektivische abgebrochene Ansicht von Chassis, Schwenkachse und Schwenkeinrichtung des Kotflügels in einer Zwischenschwenkstellung,
- Figur 6:: den Fahrzeuganhänger in Senkstellung und
- Figur 7:: eine Detailansicht von Chassis, Schwenkachse und Schwenkeinrichtung des Kotflügels in der Senkstellung.

Die Erfindung betrifft einen absenkbaren Fahrzeuganhänger (1) mit einer Schwenkachse (4) und einer Bewegungseinrichtung (49) für einen Kotflügel (11).

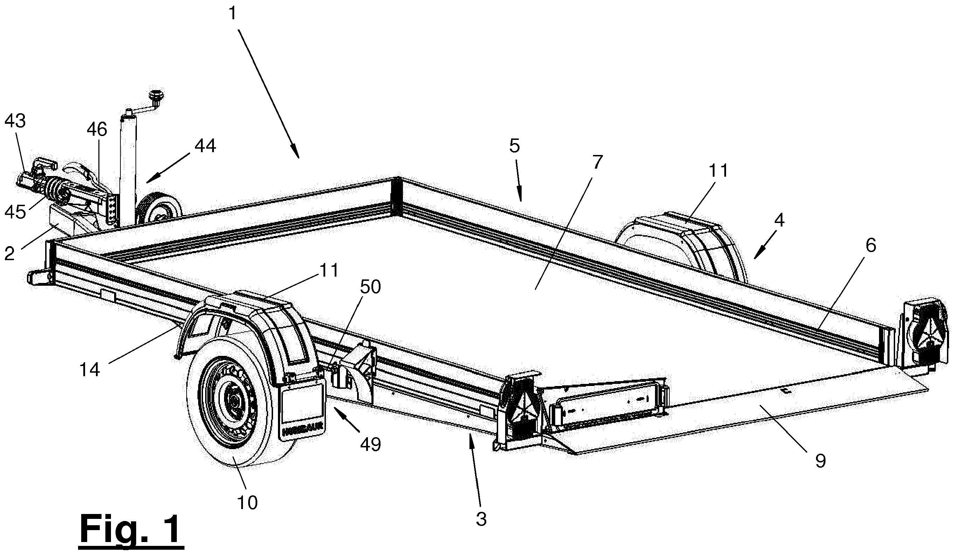

Figur 1 zeigt einen absenkbaren Fahrzeuganhänger (1) mit einem Chassis (3), einer Schwenkachse (4) und einem Aufbau (5) in verschiedenen Aufbauvarianten. Der Aufbau (5) weist in den verschiedenen Ausführungsformen jeweils einen auf dem Chassis (3) angeordneten Grundrahmen (6) aus mehreren miteinander verbundenen Rahmenprofile auf, die an der Frontseite und den beiden Längsseiten des Chassis (3) angeordnet sind. Am Grundrahmen (6) ist ein Boden (7) aufgenommen und abgestützt. Der Aufbau (5) kann ferner ein Heckteil (9) aufweisen, das z.B. als feste keilförmige Rampe oder als schwenkbare Heckklappe oder in anderer geeigneter Weise ausgebildet ist. Am Heckbereich können außerdem die Beleuchtung und ein gegebenenfalls schwenkbarer Kennzeichenhalter angeordnet sein.

In Figur 1 ist der Aufbau (5) als Plattformaufbau mit einer durchgehenden Bodenplatte (7) bzw. einer Ladefläche dargestellt. Alternativ kann der Boden (7) als Strukturträger ausgebildet sein, der z.B. Stützschienen oder Stützträger für Fahrzeugräder aufweist. In anderen Varianten kann der Aufbau (5) in beliebig anderer Weise, z.B. als Koffer- oder Planenaufbau oder als gehäuseartiger Aufbau für einen einen Tiertransporter, insbesondere Pferdetransporter, ausgebildet sein. Andere Aufbauvarianten können Pritschen mit oder ohne Bordwände, Fahrzeugtransporter oder dgl. sein.

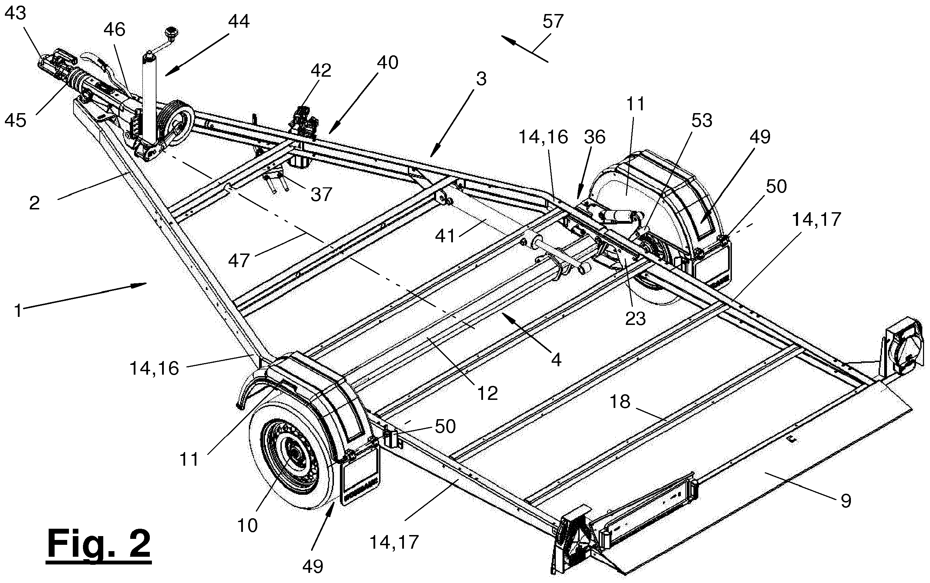

Die Ausbildung des Chassis (3) und der Schwenkachse (4) kann für alle Aufbauvarianten die Gleiche sein. Figur 2 zeigt eine perspektivische Draufsicht auf das Chassis (3) und die Schwenkachse (4). Das Chassis (3) weist beidseitige Längsträger (14) auf. Zudem können ein oder mehrere Querträger (18) vorhanden sein, was allerdings nicht zwingend erforderlich ist. Das Chassis (3) hat frontseitig eine bevorzugt starre Deichsel (2), insbesondere V-Deichsel. Sie kann separat angeordnet und mit den Längsträgern (14) verbunden sein. In den gezeigten Ausführungsbeispielen gehen die Längsträger (14) in die schrägen Deichselarme der V-Deichsel über bzw. bilden diese. Am vorderen Deichselende ist eine Anhängerkupplung (43) angeordnet, die bevorzugt als Kugelkopf-Anhängerkupplung ausgebildet ist.

Der Fahrzeuganhänger (1) bzw. das Chassis (3) kann mit einer Bremseinrichtung (44) ausgerüstet sein. Diese weist nicht näher dargestellte Radbremsen auf. Ferner sind eine Betriebsbremse (45), z.B. eine Auflaufbremse, und/oder eine Feststellbremse (46), insbesondere eine Handbremse, sowie ein Bremszug (47) zur Betätigung der Radbremsen vorhanden. Der Bremszug (47) ist bevorzugt mit Bowdenzügen ausgerüstet, die mit den Radbremsen verbunden sind. An der Deichsel (2) kann ferner noch ein Stützrad fest oder abnehmbar angeordnet sein.

Der Fahrzeuganhänger (1) ist als Straßenfahrzeug konzipiert und weist Räder (10) mit beweglichen, insbesondere schwenkbaren Kotflügeln (11) und Bewegungseinrichtungen (49) auf. Die Bewegungseinrichtungen (49) sind in den gezeigten Ausführungsbeispielen als Schwenkeinrichtungen ausgebildet.

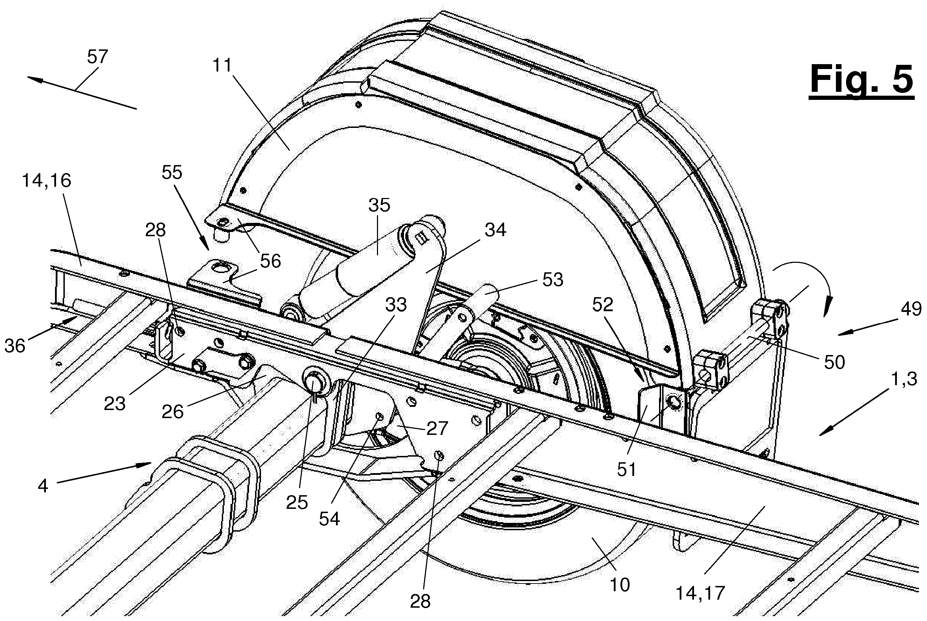

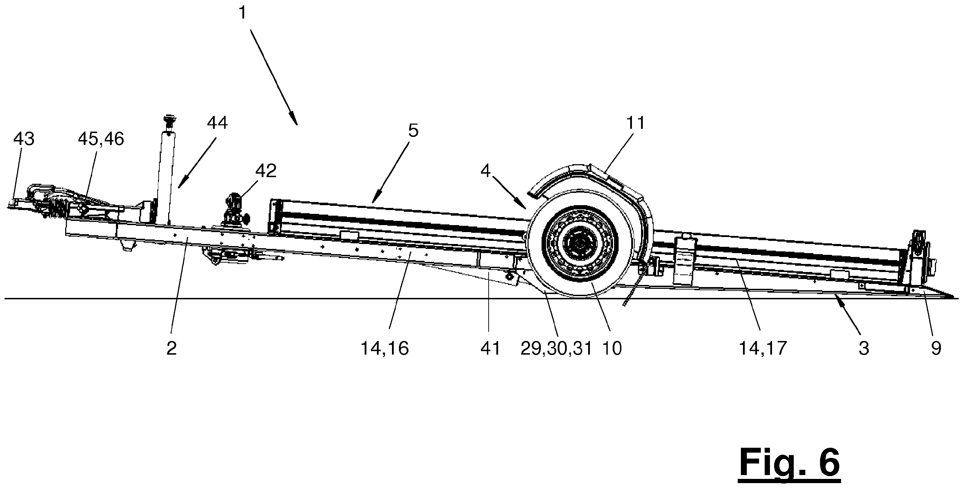

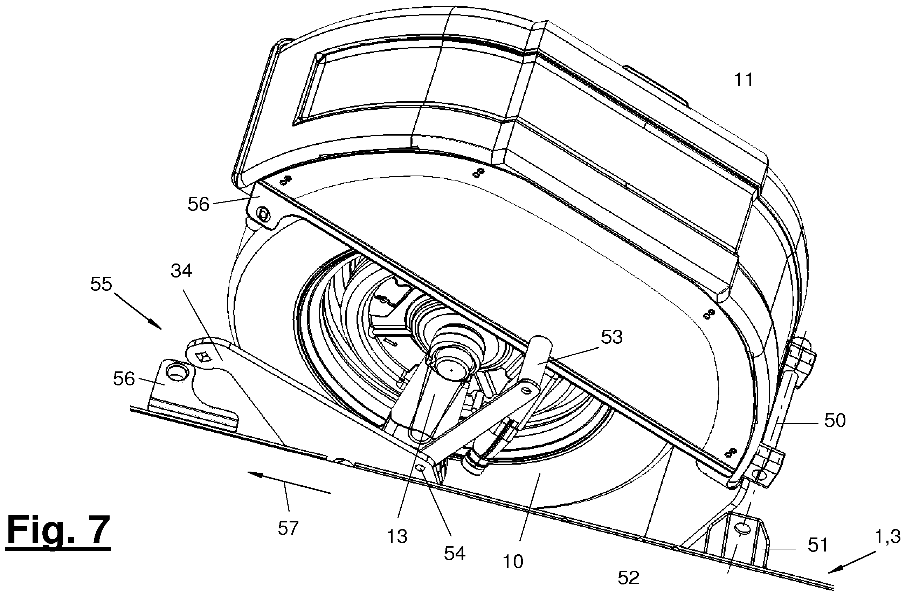

Bei dem absenkbaren Fahrzeuganhänger (1) können das Chassis (3) und der Aufbau (5) aus einer angehobenen Fahrstellung in eine Absenkstellung abgesenkt werden, in der das Be- und Entladen erleichtert ist. Bei ausgefahrenem frontseitigem Stützrad können Chassis (3) und Aufbau (5) dabei eine Schräglage mit heckseitigem Bodenkontakt einnehmen. In den Zeichnungen ist die angehobene Fahrstellung dargestellt. Figur 5 zeigt eine Zwischenstellung. Figur 6 und 7 zeigen die Senkstellung.

Das Heben und Senken wird mit der Schwenkachse (4) bewirkt. Diese kann beliebig ausgebildet sein. In den Zeichnungen ist eine bevorzugte Ausführungsform der Schwenkachse (4) dargestellt und wird nachfolgend beschrieben.

Die Schwenkachse (4) weist in den gezeigten Ausführungsbeispielen einen über die Fahrzeugbreite durchgehenden Achskörper (12) mit endseitigen Radschwinghebeln (13) auf, an denen die Fahrzeugräder (10) mit Naben drehbar gelagert sind. Die Fahrzeugräder (10) befinden sich neben dem Chassis (3) sowie dem Aufbau (5) und sind von Kotflügeln (11) überdeckt, die sich beim Heben und Senken des Chassis (3) mittels der Bewegungseinrichtung (49), insbesondere Schwenkeinrichtung, mitbewegen. Der Achskörper (12) ist bevorzugt als hohles Achsrohr einer Federachse, z.B. Gummi- oder Torsionsfederachse, ausgebildet, in dem ein mit jeweils einem Radschwinghebel (13) verbundener Drehstab mit Gummischnüren oder Torsionsfederelementen angeordnet ist.

Die Schwenkachse (4) weist ferner Achsböcke (23) auf, die eine Befestigung der Schwenkachse (4) am Chassis (3) ermöglichen. Die Befestigung erfolgt z.B. durch Schweißen oder durch eine Bolzenverbindung (28), die bevorzugt als Schraubverbindung ausgebildet ist und die gegebenenfalls lösbar ist. Alternativ kann eine Nietenverbindung oder eine andere Art von Bolzenverbindung (28) in fester oder lösbarer Ausbildung vorgesehen sein. Der Achskörper (12) ist mittels Schwenklagern (25) an den Achsböcken (23) drehbar gelagert.

An den äußeren Ende des Achskörpers (12) und außerhalb des Chassis (3) sind Stützarme (34) drehfest angeordnet, die zur Aufnahme von einem Stoßdämpfer (35) dienen. Dieser ist an einem Ende mit dem Stützarm (34) und am anderen Ende mit einem rückwärtigen Fortsatz des Radschwinghebels (13) gelenkig verbunden.

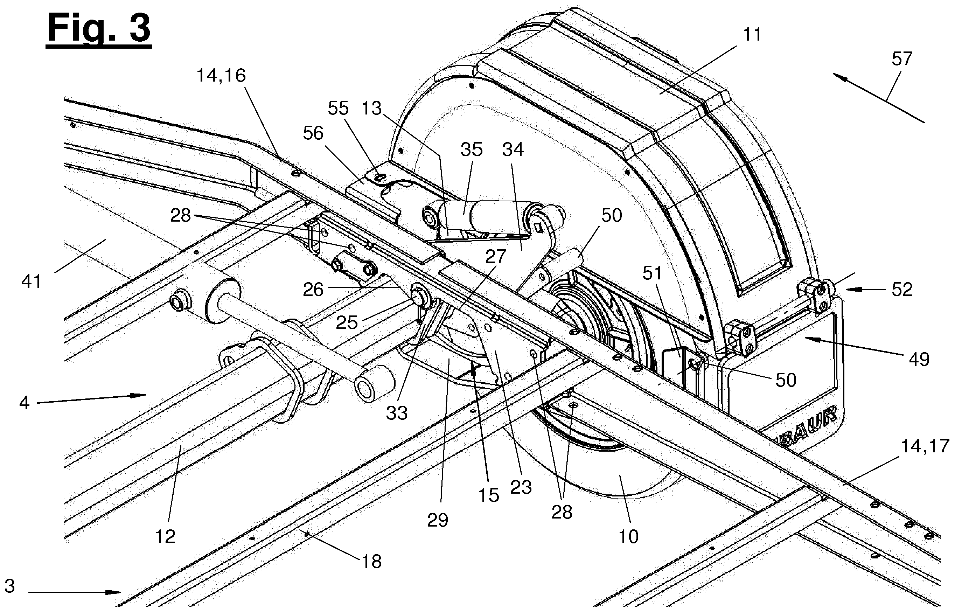

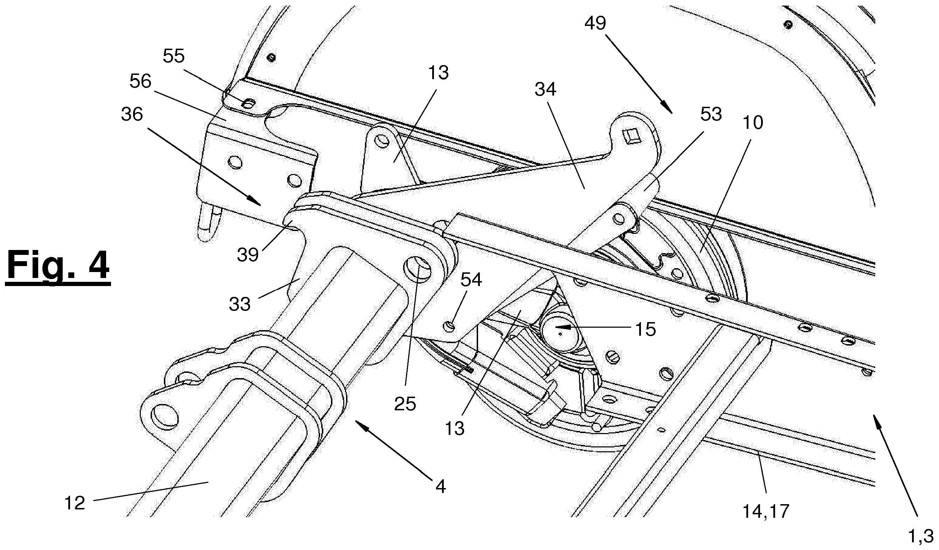

Zum Heben und Senken des Chassis (3) und des Aufbaus (5) wird der Achskörper (12) um die Schwenklager (25) an den Achsböcken (23) gedreht. Dabei drehen die Radschwinghebel (13) und die Stützarme (34) nebst Stoßdämpfer (35) mit. In der angehobenen Fahrstellung nehmen die Radschwinghebel (13) gemäß Figur 3 und 4 eine schräg abwärts gerichtete Lage ein. In der Absenkstellung gemäß Figur 6 und 7 ragen sie schräg nach oben, wodurch der Achskörper (12) mitsamt Chassis (3) und Aufbau (5) gegenüber den Fahrzeugrädern (10) abgesenkt wird.

Ein Kotflügel (11) weist eine eigene Bewegungseinrichtung (49) auf, mit der er eine eigenständige und von der Schwenkachse (4) abgeleitete Kotflügelbewegung, insbesondere Schwenkbewegung, ausführt. Die Bewegungseinrichtung (49) ist bevorzugt als Schwenkeinrichtung ausgebildet. Vorzugsweise hat jeder Kotflügel (11) seine eigene Bewegungs- bzw. Schwenkeinrichtung (49). Wenn die Schwenkachse (4) sich zum Absenken oder Heben des Fahrzeuganhängers (1) und seines Chassis (3) bewegt, wird durch diese Bewegung der Bewegungs- bzw. Schwenkantrieb (49) betätigt und angetrieben. Figur 3 zeigt den Kotflügel (11) in der abgeschwenkten Fahrtstellung und Figur 7 in der hochgeschwenkten Absenkstellung des Fahrzeuganhängers (1).

Für die konstruktive Ausgestaltung und Funktion des Bewegungs- bzw. Schwenkantriebs (49) gibt es verschiedene Möglichkeiten. In den Ausführungsbeispielen ist eine bevorzugte Variante eines Schwenkantriebs (49) dargestellt.

Die Schwenkeinrichtung (49) weist ein Schwenklager (50) zwischen dem Kotflügel (11) und dem Chassis (3) auf. Die Schwenkeinrichtung (49) weist ferner ein Koppelelement (53) zwischen der Schwenkachse (4), insbesondere ihrem schwenkbaren Achskörper (12) und dem Kotflügel (11) auf. Mittels des Schwenklagers (50) kann sich der Kotflügel (11) eigenständig und um eine relativ ortsfest am Chassis (3) angeordnete Schwenkachse drehen. Mit dem Koppelelement (53) wird die Bewegung der Schwenkachse (4), insbesondere des schwenkbaren Achskörpers (12), auf den Kotflügel (11) übertragen und als Antriebsbewegung genutzt.

Das Koppelelement (53) ist in der gezeigten VorwärtsFahrtrichtung (57) gesehen distanziert vom Schwenklager (50) angeordnet. Vorzugsweise ist es dabei an einem Randbereich des Kotflügels (11), insbesondere an dem in Fahrtrichtung (57) hinteren Randbereich (52), angeordnet.

Die Schwenkachse des Schwenklagers (50) ist quer zur Fahrtrichtung (57) ausgerichtet. Das Schwenklager (50) weist einen Lagerbock (51) auf, der an einem Längsträger (14) des Chassis (3) angeordnet und befestigt ist. Das Schwenklager (50) weist ferner eine mit dem Kotflügel (11), insbesondere mit dessen Randbereich (52) verbundene Lagerstange auf, die in einem Lagerauge des Lagerbocks (51) drehbar aufgenommen ist.

Das Koppelelement (53) ist drehbar einerseits mit dem Kotflügel (11) und andererseits mit dem Achskörper (12) verbunden. Zur Verbindung mit dem Achskörper (12) kann ein eigenständiger Beschlag oder der Stützarm (34) benutzt werden. Das Koppelelement (53) ist z.B. an dem Stützarm (34) drehbar angelenkt, wobei der hier vorgesehene achsseitige Anlenkpunkt (54) unterhalb des Schwenklagers (50) angeordnet ist. Das Koppelelement (53) ist als aufrechte Koppelstange ausgebildet und nimmt z.B. in der Fahrstellung die in Figur 3 gezeigte schräge und überwiegend aufrechte Lage ein.

Die Schwenkeinrichtung (49) weist ferner ein Haltemittel (55) auf, das zur Führung und Zentrierung des Kotflügels (11) am Chassis (3) in der angehobenen Fahrstellung der Schwenkachse (4) dient. Das Haltemittel (55) kann unterschiedlich ausgebildet sein. Es ist z.B. als Zapfenführung gestaltet und an einem Stützbeschlag (56) angeordnet. Das Haltemittel (55) befindet sich dabei in Fahrtrichtung (57) am anderen, insbesondere vorderen Randbereich des Kotflügels (11).

Der Stützbeschlag (56) besteht z.B. aus zwei Stützblechen, von denen eines am Chassis (3), insbesondere am Längsträger (14), und das andere am zugewandten Kotflügelrand angeordnet ist. Das eine Stützblech weist einen Zapfen und das andere eine zugehörige Aufnahmeöffnung auf, die in der besagten Fahrstellung gemäß Figur 3 formschlüssig in einander greifen, wobei die Stützbleche aufeinander liegen. Die Verbindung kann beim Hochschwenken des Kotflügels (11) beim Absenkvorgang gemäß Figur 7 getrennt werden und wird beim späteren Hebevorgang automatisch wieder geschlossen. In der Fahrstellung ist die Schwenkachse (4), insbesondere deren schwenkbarer Achskörper (12) fixiert, wobei über das Koppelelement (53) dann auch der Kotflügel (11) in seiner abgeschwenkten Ruhestellung am Chassis (3) gehalten und fixiert ist.

Die Achsböcke (23) sind an den Endbereichen des Achskörpers (12) vorgesehen und sind mit diesem jeweils über ein Schwenklager (25) verbunden. Die Schwenklager (25) sind oberhalb des Achskörpers (12) angeordnet und haben eine parallele Ausrichtung zu der Längsachse des Achskörpers (12). Beidseits des Schwenklagers (25) sind in Chassislängsrichtung bzw. Fahrtrichtung (57) gesehen eine vordere und eine hintere Ausnehmung (26,27) des Achsbocks (23) angeordnet. In den Ausnehmungen (26,27) wird der Achskörper (12) in den beiden Endstellungen von seiner Schwenkbewegung aufgenommen. Der einzelne Achsbock (23) kann als Blechteil aus Metall, insbesondere Stahl, ausgebildet sein. Er kann z.B. als Biege- und Schweißteil oder als Schweißkonstruktion aus Einzelblechen ausgeführt sein. Alternativ sind andere Ausgestaltungen, z.B. als Gußteil, möglich.

Die Schwenkachse (4) ist bevorzugt als Längslenkerachse ausgebildet und weist einen geraden Achskörper (12) und gerade Radschwinghebel (13) auf. An den Enden des Achskörpers (12) sind Achshalter (33) drehfest angeordnet, die z.B. als Ringschellen ausgebildet sind und an der Oberseite ein Lagerauge für die Aufnahme des durchgesteckten Lagerbolzens des Schwenklagers (25) aufweisen.

Die Achsböcke (23) können an den Längsträgern (14) in unterschiedlicher Weise angeordnet und befestigt sein. Sie können z.B. an der Unterseite der Längsträger (14) angeschweißt oder angeschraubt sein. Alternativ können sie seitlich an einem Längsträger (14), z.B. an einem Trägerausschnitt (15), angeordnet sein. Die Schwenkachse (4) kann ggf. einen am Chassis (3) angeordneten und befestigten Unterzug (29) aufweisen, der den Trägerausschnitt (15) stützend überspannt und den Achsbock (23) untergreift. Das Chassis (3) kann in der Absenkstellung mit dem Unterzug (29) auf dem Untergrund aufliegen.

Die Längsträger (14) bzw. ihre Längsträgerabschnitte (16,17) sind als abgekantete Trägerprofile ausgebildet und bestehen vorzugsweise aus Metall, insbesondere aus Stahl. Die Trägerprofile sind in den gezeigten und bevorzugten Ausführungsbeispielen als C-Profile mit aufrechten Mittelstegen ausgebildet, deren Querstege zur Chassisinnenseite weisen und eine in gleiche Richtung weisende Profilöffnung bilden. In Variation zu den gezeigten Ausführungsbeispielen können die Trägerprofile der Längsträger (14) bzw. ihrer Längsträgerabschnitte (16,17) ein anderes Querschnittsprofil, z.B. ein L-, Z-, T- oder I-Profil, aufweisen. Insbesondere kann ggf. der untere Quersteg entfallen.

In den gezeigten Ausführungsformen sind die Längsträger (14) jeweils in einen vorderen Längsträgerabschnitt (16) und einen hinteren Längsträgerabschnitt (17) unterteilt. Die vorderen und hinteren Längsträgerabschnitte (16,17) sind dabei im Achsbereich voneinander axial distanziert angeordnet, wobei sie zwischen sich den Trägerausschnitt (15) bilden. In Variation zu den Ausführungsbeispielen kann ein Längsträger (14) im Achsbereich durchgehend ausgebildet sein und ggf. einen Trägerausschnitt (15) haben.

Die Schwenkachse (4) weist eine Verriegelung (36) auf, mit der der Achskörper (12) in der Schwenklage für die angehobene Fahrstellung fixiert werden kann. Hierfür ist in oder an den Achsböcken (23) jeweils eine Riegelmechanik (38) angeordnet. Sie wirkt z.B. mit dem Achshalter (33) zusammen und sperrt dessen Drehbewegung. Wie Figur 4 verdeutlicht, weist der Achshalter (33) einen Anschlag (39) oder Stütznasen auf, die in dieser Achsenstellung auf einem Riegelbolzen (nicht dargestellt) aufliegen und eine Drehsperre bilden. Die Verriegelung (36) weist einen am Chassis (3) angeordneten Riegelzug (37) auf, der z.B. aus einem Betätigungshebel und hieran anschließenden Bowdenzügen besteht, die jeweils mit einem Riegelbolzen verbunden sind und diesen bei Hebelbetätigung gegen die Kraft einer Rückstellfeder zurückziehen können. Der hierdurch freigegebene Achskörper (12) kann sich dann zum Absenken drehen.

Die Schwenkachse (4) weist ferner eine Betätigungseinrichtung (40) zum Anheben aus der Absenkstellung in die Fahrstellung auf. Die Betätigungseinrichtung (40) umfasst z.B. einen Antrieb (41), insbesondere einen bevorzugt hydraulischen Zylinder, der drehend auf den Achskörper (12) einwirkt. Hierfür ist am Achskörper (12) ein Beschlagteil angeordnet, das über ein Verbindungsglied (nicht dargestellt) mit dem Antrieb (41), z.B. mit dem Kolbenstangenende, verbunden ist. Die Betätigungseinrichtung (40) umfasst ferner eine manuell oder motorisch angetriebene Pumpe (42), die mit dem hydraulischen Zylinder (41) verbunden ist. Alternativ kann der Antrieb (41) auch in anderer Weise, z.B. als elektrischer oder sonstiger Stellantrieb mit linearer oder anderer Antriebsbewegung, ausgebildet sein.

In den Ausführungsbeispielen ist ein Fahrzeuganhänger (1) mit einer einzelnen Schwenkachse (4) und zwei schwenkbaren Kotflügeln (11) dargestellt. Alternativ kann ein Chassis (3) bzw. ein Fahrzeuganhänger (1) mehrere, insbesondere zwei, drei oder mehr solcher Schwenkachsen (4) mit schwenkbaren Kotflügeln (11) aufweisen. Ferner sind Kombinationen von einer normalen Achse und einer Schwenkachse (4) mit entsprechender Kotflügelausbildung möglich.

In den gezeigten Ausführungsbeispielen ist der Achskörper (12) um ein außermittig und bevorzugt oberhalb angeordnetes Schwenklager (25) drehbar gelagert und führt dabei eine schwenkende Bogenbewegung aus. In einer anderen Ausführungsform kann er um seine eigene zentrale Achse gedreht werden, wobei diese Drehbewegung ebenfalls über ein Koppelelement (53) auf den Kotflügel (11) übertragen werden kann. In einer anderen Variante ist es möglich, auf Achsböcke zu verzichten und einen Achskörper mittels eines Achsenhalters oder Schwenkarm direkt am Chassis (3), insbesondere an dessen Längsträger(n) (14) schwenkbar zu lagern.

Die eigenständige Bewegungseinrichtung (49) ist in einer alternativen Ausführungsform als Hubeinrichtung ausgebildet und kann den Kotflügel in der Höhe verschieben, wobei er in Schienen oder anderen Führungsmitteln verschieblich geführt ist. Die Hubeinrichtung und die Führungsmittel sind zwischen zwischen dem Kotflügel (11) und dem Chassis (3) angeordnet. Auch in diesem Fall kann die Hub- und Senkbewegung von der Schwenkachsenbewegung abgeleitet werden. Hierfür ist ein entsprechend adaptiertes Koppelelement vorhanden. Ferner kann in einer Abwandlung der Ausführungsbeispiele das Koppelelement (53) als mehrteiliges Lenkergetriebe oder in anderer geeigneter Weise ausgebildet sein.

In den gezeigten Ausführungsbeispielen ist ein einzelner und über die Chassisbreite durchgehender Achskörper (12) vorhanden, der an beiden Enden Radschwinghebel (13) aufweist. In einer alternativen Bauform können Halbachsen oder Stummelachsen mit verkürzten Achskörpern und einseitig angeordneten Radschwinghebeln zum Einsatz kommen. Statt der gezeigten Längslenkerachse kann alternativ eine Schräglenkerachse vorhanden sein.

Abwandlungen der gezeigten und beschriebenen Ausführungsformen sind in verschiedener Weise möglich. Insbesondere können die Merkmale der gezeigten Ausführungsbeispiele und ihrer genannten Abwandlungen im Rahmen der Ansprüche miteinander kombiniert und insbesondere auch vertauscht werden.

In weiterer Abwandlung kann die Bremseinrichtung (44) entfallen oder in anderer Weise ausgebildet sein. Desgleichen kann die Anhängerkupplung (43) variieren. Statt der gezeigten starren V-Deichsel kann das Chassis (3) und der Fahrzeuganhänger (1) eine andere Deichselform, z.B. eine Rohrdeichsel, aufweisen. Im Weiteren kann ein Längsträger (14) in mehr als zwei Längsträgerabschnitte unterteilt sein. Außerdem kann die Ausgestaltung des Aufbaus (5) in beliebiger Weise variieren.

### BEZUGSZEICHENLISTE

- 1: Fahrzeuganhänger
- 2: Deichsel
- 3: Chassis
- 4: Schwenkachse
- 5: Aufbau
- 6: Grundrahmen
- 7: Boden
- 8 9: Heckteil, Rampe, Heckklappe
- 10: Fahrzeugrad
- 11: Kotflügel
- 12: Achskörper, Achsrohr
- 13: Radschwinghebel
- 14: Längsträger
- 15: Trägerausschnitt
- 16: Längsträgerabschnitt vorn
- 17: Längsträgerabschnitt hinten
- 18: Querträger
- 19 20 21 22 23: Achsbock
- 24 25: Schwenklager
- 26: Ausnehmung vorn
- 27: Ausnehmung hinten
- 28: Bolzenverbindung, Schraubverbindung
- 29: Unterzug, Stützbügel
- 30: Stützarm
- 31: Stützplatte
- 32: Ausnehmung
- 33: Achshalter
- 34: Stützarm
- 35: Stoßdämpfer
- 36: Verriegelung
- 37: Riegelzug
- 38: Riegelmechanik
- 39: Anschlag, Stütznase
- 40: Betätigungseinrichtung
- 41: Antrieb, Zylinder
- 42: Pumpe
- 43: Anhängerkupplung
- 44: Bremseinrichtung
- 45: Betriebsbremse, Auflaufbremse
- 46: Feststellbremse, Handbremse
- 47: Bremszug
- 48 49: Bewegungseinrichtung, Schwenkeinrichtung
- 50: Schwenklager von Kotflügel
- 51: Lagerbock
- 52: Randbereich
- 53: Koppelelement, Koppelstange
- 54: Anlenkpunkt
- 55: Haltemittel, Zapfenführung von Kotflügel
- 56: Stützbeschlag
- 57: Fahrtrichtung vorwärts

## Patentansprüche

1. Absenkbarer Fahrzeuganhänger aufweisend ein Chassis (3) mit einer Schwenkachse (4), einem Fahrzeugrad (10) und einem Kotflügel (11), der beim Absenken des Chassis (3) mitbewegt wird, wobei der Kotflügel (11) eine eigene Bewegungseinrichtung (49) aufweist, die mit der Schwenkachse (4) sowie mit dem Kotflügel (11) verbunden ist und die den Kotflügel (11) beim Absenken und beim Anheben des Chassis (3) eigenständig und in einer von der Schwenkachse (4) abgeleiteten Kotflügelbewegung mitbewegt,
- wobei der Kotflügel eine Relativbewegung zum Fahrzeugrad ausführt und **dadurch gekennzeichnet, dass** der Kotflügel (11) eigenständig am Chassis (3) drehbar gelagert oder verschieblich geführt ist und, dass
- die Bewegungseinrichtung (49) ein Schwenklager (50) oder eine den Kotflügel (11) in der Höhe verschiebende Hubeinrichtung zwischen dem Kotflügel (11) und dem Chassis (3) aufweist.

2. Fahrzeuganhänger nach Anspruch 1, **dadurch gekennzeichnet, dass** die Schwenkachse (4) einen schwenkbar gelagerten Achskörper (12) mit einem Radschwinghebel (13) aufweist.

3. Fahrzeuganhänger nach Anspruch 1 oder 2, **dadurch gekennzeichnet, dass** die Bewegungseinrichtung (49) ein Koppelelement (53) zwischen der Schwenkachse (4) und dem Kotflügel (11) aufweist.

4. Fahrzeuganhänger nach Anspruch 3, **dadurch gekennzeichnet, dass** das Koppelelement (53) in Fahrtrichtung (57) gesehen distanziert vom Schwenklager (50) oder der Hubführung angeordnet ist.

5. Fahrzeuganhänger nach einem der Ansprüche 1 bis 4, **dadurch gekennzeichnet, dass** das Schwenklager (50) in Fahrtrichtung (57) gesehen an einem Randbereich, insbesondere am hinteren Randbereich (52), des Kotflügels (11) angeordnet ist.

6. Fahrzeuganhänger nach einem der Ansprüche 1 bis 5, **dadurch gekennzeichnet, dass** das Schwenklager (50) einen Lagerbock (51) aufweist, der an einem Längsträger (14) des Chassis (3) angeordnet ist.

7. Fahrzeuganhänger nach einem der Ansprüche 3 bis 6, **dadurch gekennzeichnet, dass** das Koppelelement (53) an einem mit dem Achskörper (12) verbundenen Stützarm (34) angelenkt ist.

8. Fahrzeuganhänger nach einem der Ansprüche 3 bis 7, **dadurch gekennzeichnet, dass** das Koppelelement (53) als aufrechte Koppelstange ausgebildet ist.

9. Fahrzeuganhänger nach einem der Ansprüche 3 bis 8, **dadurch gekennzeichnet, dass** der achsseitige Anlenkpunkt (54) des Koppelelements (53) unterhalb des Schwenklagers (50) angeordnet ist.

10. Fahrzeuganhänger nach einem der vorhergehenden Ansprüche, **dadurch gekennzeichnet, dass** die Bewegungseinrichtung (49), insbesondere Schwenkeinrichtung, ein Haltemittel (55) zur Führung und Zentrierung des Kotflügels (11) am Chassis (3) in der angehobenen Fahrstellung der Schwenkachse (4) aufweist.

11. Fahrzeuganhänger nach Anspruch 10, **dadurch gekennzeichnet, dass** das Haltemittel (55) als Zapfenführung ausgebildet und an einem Stützbeschlag (56) angeordnet ist.

12. Fahrzeuganhänger nach Anspruch 10 oder 11, **dadurch gekennzeichnet, dass** das Haltemittel (55) in Fahrtrichtung (57) gesehen am anderen, insbesondere vorderen Randbereich des Kotflügels (11) angeordnet ist.

## Claims

1. Lowerable vehicle trailer with a chassis (3) having a swivel axle (4), a vehicle wheel (10), and a mudguard (11) which is moved with the chassis (3) when it is lowered, wherein the mudguard (11) has its own moving device (49), which is connected to the swivel axle (4) and to the mudguard (11), and which moves the mudguard (11) independently and in a movement of the mudguard that is derived from the swivel axle (4) when the chassis (3) is lowered and raised,
- wherein the mudguard performs a movement relative to the vehicle wheel and **characterized in that** the mudguard (11) is independently supported rotatably or guided movably on the chassis (3), and that the movement device (49) includes a swivel bearing (50) or a lifting device which changes the height of the mudguard (11) positioned between the mudguard (11) and the chassis (3).

2. Vehicle trailer according to Claim 1, **characterized in that** the swivel axle (4) includes an axle body (12) which is mounted so as to be swivellable with an oscillating wheel lever (13).

3. Vehicle trailer according to Claim 1 or 2, **characterized in that** the movement device (49) has a coupling element (53) between the swivel axle (4) and the mudguard (11).

4. Vehicle trailer according to Claim 3, **characterized in that** viewed in the direction of travel (57) the coupling element (53) is arranged at a distance from the swivel bearing (50) or the lift guide.

5. Vehicle trailer according to any one of Claims 1 to 4, **characterized in that** viewed in the direction of travel (57) the swivel bearing (50) arranged on an edge region, particularly the rear edge region (52) of the mudguard (11) .

6. Vehicle trailer according to any one of Claims 1 to 5, **characterized in that** the swivel bearing (50) has a bearing bracket (51) which is arranged on a longitudinal member (14) of the chassis (3).

7. Vehicle trailer according to any one of Claims 3 to 6, **characterized in that** the coupling element (53) is attached in articulated manner to a support arm (34) which is connected to the axle body (12).

8. Vehicle trailer according to any one of Claims 3 to 7, **characterized in that** the coupling element (53) is designed as a straight coupling rod.

9. Vehicle trailer according to any one of Claims 3 to 8, **characterized in that** the axle-side articulation point (54) of the coupling element (53) is arranged below the swivel bearing (50).

10. Vehicle trailer according to any one of the preceding claims, **characterized in that** the movement device (49), in particular the swivel device, has a retaining means (55) for guiding and centring the mudguard (11) on the chassis (3) when the swivel axle (4) is in the raised, travelling position.

11. Vehicle trailer according to Claim 10, **characterized in that** the retaining means (55) is embodied as a trunnion bearing and is arranged on a support fitting (56).

12. Vehicle trailer according to Claim 10 or 11, **characterized in that** viewed in the direction of travel (57) the retaining means (55) is arranged on the other edge region, particularly the front edge region of the mudguard (11).

## Revendications

1. Remorque de véhicule abaissable comportant un châssis (3) avec un axe de pivotement (4), une roue de véhicule (10) et une aile (11), qui est déplacée conjointement lors de l'abaissement du châssis (3), sachant que l'aile (11) comporte un dispositif de déplacement propre (49), qui est relié à l'axe de pivotement (4) ainsi qu'à l'aile (11) et qui déplace conjointement de façon autonome l'aile (11) lors de l'abaissement et lors du relevage du châssis (3) et dans un déplacement de l'aile dérivant de l'axe de pivotement (4)
- sachant que l'aile exécute un mouvement relatif par rapport à la roue de véhicule et **caractérisée en ce que** l'aile (11) est logée de façon autonome pouvant tourner sur le châssis (3) ou est guidée de façon mobile, et, **en ce que** le dispositif de déplacement (49) comporte entre l'aile (11) et le châssis (3), un palier de pivotement (50) ou un dispositif de levage déplaçant l'aile (11) en hauteur.

2. Remorque de véhicule selon la revendication 1, **caractérisée en ce que** l'axe de pivotement (4) comporte un corps d'essieu (12) logé pouvant pivoter avec un levier oscillant de roue (13).

3. Remorque de véhicule selon la revendication 1 ou 2, **caractérisée en ce que** le dispositif de déplacement (49) comporte un élément de couplage (53) entre l'axe de pivotement (4) et l'aile (11).

4. Remorque de véhicule selon la revendication 3, **caractérisée en ce que** l'élément de couplage (53) est disposé, vu en direction de la marche (57), à distance du palier de pivotement (50) ou du guidage de levage.

5. Remorque de véhicule selon l'une quelconque des revendications 1 à 4, **caractérisée en ce que** le palier de pivotement (50) est disposé, vu dans la direction de la marche (57), sur une zone de bordure de l'aile (11), en particulier sur la zone de bordure arrière (52).

6. Remorque de véhicule selon l'une quelconque des revendications 1 à 5, **caractérisée en ce que** le palier de pivotement (50) comporte un support de palier (51), qui est disposé sur un longeron (14) du châssis (3).

7. Remorque de véhicule selon l'une quelconque des revendications 3 à 6, **caractérisée en ce que** l'élément de couplage (53) est articulé sur un bras de support (34) relié au corps d'essieu (12).

8. Remorque de véhicule selon l'une quelconque des revendications 3 à 7, **caractérisée en ce que** l'élément de couplage (53) est constitué comme barre de couplage droite.

9. Remorque de véhicule selon l'une quelconque des revendications 3 à 8, **caractérisée en ce que** le point d'articulation côté axe (54) de l'élément de couplage (53) est disposé en dessous du palier de pivotement (50) .

10. Remorque de véhicule selon l'une quelconque des revendications précédentes, **caractérisée en ce que** le dispositif de déplacement (49), en particulier le dispositif de pivotement, comporte un moyen de retenue (55) pour guider et centrer l'aile (11) sur le châssis (3) dans la position de marche relevée de l'axe de pivotement (4).

11. Remorque de véhicule selon la revendication 10, **caractérisée en ce que** le moyen de retenue (55) est constitué comme un guidage à tenon et est disposé sur une armature d'appui (56).

12. Remorque de véhicule selon la revendication 10 ou 11, **caractérisée en ce que** le moyen de retenue (55), vu dans la direction de la marche (57), est disposé sur l'autre zone de bordure de l'aile (11), en particulier sur la zone de bordure avant.
